# EUROPEAN PATENT SPECIFICATION

(11) **EP 1 151 340 B1**
(45) Date of publication and mention of the grant of the patent: **02.10.2002**
(21) Application number: 00901789.8
(22) Date of filing: 04.02.2000
(51) Int. Cl.: G02B 6/44, G02B 6/48

(54) **PROTECTION OF DIELECTRIC CABLES**
SCHUTZ FÜR EIN DIELEKTRISCHES KABEL
PROTECTION DES CABLES DIELECTRIQUES

(30) Priority: 05.02.1999 GB 9902682
(43) Date of publication of application: 07.11.2001
(73) Proprietor: Cookson Projects Limited, London WC2N 6HJ (GB)
(72) Inventor: BAKER, James Charles, Burford, Oxfordshire OX18 4NE (GB)
(74) Representative: Frost, Alex John
(86) International application number: GB0000337
(87) International publication number: WO00046625

(56) References cited:
- WO-A-97/06459
- DE-A- 3 506 883
- GB-A- 2 279 820
- GB-A- 2 330 705
- GB-A- 2 335 086

## Description

This invention relates to the protection of dielectric cables, such as all dielectric self supporting (ADSS) cables, when mounted adjacent overhead power lines.

It has for some time been realised that the national network of electricity pylons or towers which carry overhead power lines also provides a convenient location for telecommunications cables. Typically, ADSS optical cables, carrying fibre-optic signals, are strung between the towers in proximity with the high voltage power lines.

As will be well known to those skilled in the art, ADSS cables generally comprise a bundle of fibres encased in an insulating jacket. This jacket is subject to physical degradation over periods of time, ultimately resulting in damage to the signal-carrying fibres within. One significant cause of this physical degradation in the jacket is thought to be due to a phenomenon known as dry band arcing.

The ADSS cables are suspended from the towers by a metal strap. Usually, the strap has preformed wires that wrap around the cable to support it. However, half shells may be employed instead; these clamp snugly around the insulating jacket of the cable and hold the cable in place relative to the towers.

Because the ADSS cables are mounted in proximity to the high voltage overhead power lines, they experience an electric field. This field can be appreciable; for example it is common for ADSS cables to experience an electric field of some 30kV when mounted in proximity to a 400kV power line.

There is, therefore, an electric circuit created by the above arrangement. This comprises the high voltage power line, the capacitive coupling between this power line and the ADSS cable, and the path to earth along the cable to the metal strap which connects the surface of the ADSS cable jacket and the tower, the tower and strap being substantially at ground potential.

When the ADSS cable is first installed, no current flows around this circuit because the ADSS cable is a perfect dielectric (and thus has infinite resistance). As the jacket weathers, thus losing its natural hydrophobicity, and becomes contaminated with surface pollutants, however, currents begin to flow around the circuit. Although the leakage currents flowing depend to a certain extent upon the surface resistance of the dielectric cable, they are fundamentally limited by the capacitance between the power line and the dielectric cable. Typically, the maximum leakage current is a few mA.

Dry band arcing occurs when the jacket of a polluted ADSS cable becomes completely wet, and then starts to dry out. This is because small lengths of dried-out jacket then have to drop very high potentials. At this point, arcing can occur. It is important to realise that the arc roots on the wet pollutant, since this forms the path of least electrical resistance. The temperature of the root of the arc is therefore limited by the boiling point of water. It is the heat radiated from these arcs that can be sufficient to destroy the jacket in the dry band.

The problem of dry band arcing is particularly severe at those points along the ADSS cable where it is attached to a tower. This is because the capacitive coupling between the power line and the ADSS cable means that the coupled currents are at a maximum at these points. Also, leakage currents of a few mA are particularly destructive. This is because such leakage currents are too low quickly to dry out the surface of the cable through Ohmic heating, yet still high enough that arcs contain sufficient energy to damage the dielectric cable.

To address this problem, many solutions have been proposed. A number of these are outlined in "Arc Control Devices for use on All-Dielectric Self-Supporting Optical Cables" by C.N. Carter, IEEE Proceedings-A, Vol. 140, No. 5 (September 1993). As this paper points out, certain materials are particularly resistant to dry band arcing, in particular silicone, because they are non-tracking, heat resistant and hydrophobic. The problem with silicone, however, is that it is not sufficiently mechanically robust to be used as a cable jacket material.

One proposal discussed in the paper is to cover a section of the ADSS cable near the fitting adjacent to the towers with a thin layer of hydrophobic fully degradation resistant material. The idea is that the over sheath will attract dry band arcing and be able to withstand it. However, the paper casts doubt on the ability of a thin over sheath of hydrophobic material to remain undamaged by arc root heating and concludes that the life of such an arrangement would be uncertain.

The paper also discusses the use of a hydrophobic material retrospectively applied to an installed cable in order to prevent, or at least reduce the incidence of, dry band arcing. However, the paper concludes that in practice the length of over sheath required, or the equivalent number of sheds, is so large as to render the approach impractical.

Finally, the paper discusses the use of an insulator between the fitting and the support. However, the paper concludes that wet insulators do not present an effective barrier to leakage currents; also, the larger cross sectional area of the insulator relative to that of the cable means that it has a lower surface resistance, making the cable the preferred site for electrical activity. Thus, the insulator is of no use in preventing damage to the installed cable through dry band arcing.

The present invention addresses the problem of protecting ADSS cables from damage due to dry band arcing and mounting the cables on a overhead power line.

According to the present invention, there is provided a method of mounting a dielectric cable on an overhead power line, comprising placing a sleeve around a mandrel, the mandrel defining an aperture therethrough to receive a dielectric cable; locating the mandrel and sleeve in fixed relation to the power line support structure; urging the dielectric cable through the aperture in the mandrel; withdrawing the mandrel from the sleeve when the dielectric cable has been urged through the aperture in the mandrel, such that the sleeve encases the dielectric cable; and removing the mandrel from the dielectric cable.

The invention allows the cable to be encased by the sleeve without having to split the latter. Particularly if the sleeve is formed of an elastomeric material, the protection afforded to the surface of the material is improved.

Preferably, the mandrel and sleeve are located immediately adjacent (or at least close to) the power line support structure. In that case, the method may further comprise the steps of supporting the dielectric cable from the power line support structure with a suspension member, a first end thereof being affixed to the power line support structure, and a second end thereof being affixed around the surface of the dielectric cable.

Traditionally, a metal strap has been used to suspend the ADSS cable from the power line support structure. This is bolted or otherwise attached to the power line support structure at one end, and has a helical arrangement at the other end to cradle and grip the ADSS cable without damaging its surface integrity.

The sleeves preferably have surface properties including hydrophobicity, heat and track resistance. It is also desirable that the surfaces of the sleeves are adapted to limit the leakage current from the dielectric cable to ground potential, such that any dry band arcing occurring at the dielectric cable or at the sleeve contains insufficient energy to damage the dielectric cable or sleeve. In addition, the sleeves are preferably substantially more hydrophobic than the surface of the dielectric cable such that any dry band arcing occurs on the sleeve rather than the dielectric cable. In this case, the sleeves are preferably able to withstand the effect indefinitely.

In addition, there is provided an arrangement comprising a power line support structure substantially at ground potential; a dielectric cable suspended from the support structure and located within an electric field, the surface of the dielectric cable being resistant to electrical tracking; and a suspension member suspending the dielectric cable from the support structure, the suspension member having a insulating linkage arranged in series between the dielectric cable and the support structure, the surface of the insulating linkage being resistant to electrical tracking and adapted to limit the leakage current from the dielectric cable to ground potential, such that any dry band arcing occurring at the dielectric cable or the insulating linkage contains insufficient energy to damage the said dielectric cable or insulating linkage.

Placing a high resistance path between the dielectric cable and earth minimises the total leakage current that can flow. This also reduces the risk of damage through dry band arcing. For example, the typical leakage current to earth across the surface of an ADSS cable held with a prior art metallic strap is a few mA. If a high resistance dielectric material, such as silicone for example, is employed as the surface of an insulating linkage, then the total resistance of the path to earth is increased thus reducing the leakage current from the dielectric cable to ground to about 1mA. Depending on the degree of track resistance, this is approximately the level of leakage current above which the dielectric cable begins to exhibit structural damage through dry band arcing.

Silicone is particularly preferred as it reduces the leakage current to around 0.1mA which is substantially below the leakage current which can cause destruction of the dielectric cable when dry band arcing occurs.

Whilst it is apparent that a surface which is fully resistant to electrical tracking will be most beneficial in withstanding the effect of dry band arcing, benefits still exist even if the low leakage currents are present on an insulating linkage or ADSS cable jacket which is only track resistant. Thus, the term "resistant to electrical tracking" is to be construed to cover both surfaces that are non-tracking and surfaces which are only partially resistant to tracking.

Moreover, there is provided an arrangement comprising a power line support structure substantially at ground potential; a dielectric cable suspended from the support structure and located within an electric field, the surface of the dielectric cable being resistant to electrical tracking; and a suspension member suspending the dielectric cable from the support structure, the suspension member having an insulating linkage arranged in series between the dielectric cable and the support structure, the surface of the insulating linkage being resistant to electrical tracking and substantially more hydrophobic than the surface of the dielectric cable such that any dry band arcing preferentially occurs at the insulating linkage rather than the dielectric cable.

Because the linkage is more hydrophobic than the surface of the dielectric cable, the linkage dries more quickly than the cable which is preferably an ADSS optical cable. Thus, any dry bands form on the linkage before the cable starts to dry. The consequence of this is that dry band arcing preferentially occurs on the linkage of the suspension member, which is preferably able to withstand indefinitely the effect, or at least to withstand it sufficiently well to allow planned periodic refurbishment or replacement. In this case the degree of track resistance of the ADSS cable is less critical.

An insulator that is sufficiently more hydrophobic than the surface of the dielectric cable will be the preferred site for electrical activity, even though its surface area per unit length may be larger than that of the cable.

Preferably, the surface of the insulating linkage is "shedded". Not only does this shape cause rain water to run off more easily, but the increased surface area (relative to a planar surface) causes enhanced evaporation. Coupled with the use of a hydrophobic material, the dielectric linkage will dry significantly more quickly than the surface of the dielectric cable. Also, the undersides of the sheds tend to remain dry and the provision of these numerous "dry" areas increases the surface resistance.

In the case where the surface of the insulating linkage is more hydrophobic than the surface of the dielectric cable, it is preferable that the surface of the insulating linkage is ablative. Thus, where dry band arcing occurs, preferentially upon the insulating linkage, the surface of the linkage is ablated to expose fresh insulating linkage surface material which is hydrophobic and free from atmospheric pollutants.

Silicone is particularly preferred in an insulating linkage for suspending a dielectric cable to limit leakage current from the dielectric cable to ground potential when the dielectric cable is located in an electric field, especially when the insulating linkage forms at least a part of a surface of a suspension member for suspending a dielectric cable from a power line support structure substantially at ground potential, to limit the leakage current from the dielectric cable to ground potential and when the dielectric cable is located in an electric field such that any dry band arcing occurring at the dielectric cable or the insulating linkage contains insufficient energy to damage the said dielectric cable or insulating linkage.

A method of supporting a dielectric cable adjacent an overhead power line, comprises the steps of: supporting the power line from a support structure substantially at ground potential; suspending a dielectric cable from the support structure using a suspension member such that the dielectric cable is located within an electric field generated by the power line, the surface of the dielectric cable being resistant to electrical tracking; and providing an insulating linkage within the suspension member, the insulating linkage being in series between the dielectric cable and the support structure, the surface of the insulating linkage being resistant to electrical tracking and adapted to limit the leakage current from the dielectric cable to ground potential, such that any dry band arcing occurring at the dielectric cable or the insulating linkage contains insufficient energy to damage the said dielectric cable or insulating linkage.

A method of supporting a dielectric cable adjacent an overhead power line, comprises the steps of supporting the power line from a support structure substantially at ground potential; suspending a dielectric cable from the support structure using a suspension member such that the dielectric cable is located within an electric field generated by the power line, the surface of the dielectric cable being resistant to electrical tracking; and providing an insulating linkage within the suspension member, the insulating linkage being in series between the dielectric cable and the support structure, the surface of the insulating linkage being resistant to electrical tracking and substantially more hydrophobic than the surface of the dielectric cable such that any dry band arcing preferentially occurs at the insulating linkage rather than the dielectric cable.

It will be understood that, whilst either a material exhibiting enhanced hydrophobicity or a material providing a high resistance path to ground can be employed as an insulating linkage, and advantages will accrue, a material combining both these properties (such as silicone) will be even more advantageous.

It will also be understood that the sleeves installed according to the above method could be used in combination with an insulating support member. More usually, however, either insulating sleeving or an insulating support member would be used. Largely, the choice depends upon the electrical status of the power line support structure to which the ADSS optical cable is to be attached, and the relative ease with which the arrangements can be installed. For safety reasons, it may be preferable to employ the sleeves instead if, for example, access to a tower peak is required under live line conditions. In this case, depending upon the construction of the tower, ungrounded ADSS fittings may be precluded by Safety Rules. In fact, the use of sleeves improves the level of safety by further isolating the ADSS cable from the tower.

The invention may be put into practice in a number of ways, one of which will now be described by way of example only and with reference to the accompanying Figures, in which:-
Figure 1 shows a schematic drawing of overhead power line towers carrying overhead power lines and an ADSS optical cable;
Figure 2 shows a close-up of the region marked A in Figure 1;
Figure 3 shows a close-up of the region marked B in Figure 1;
Figure 4 shows a close-up of the region marked C in Figure 1;
Figure 5a shows, over time, the leakage current measured in a salt-fog chamber at a first location on an arrangement having an insulating linkage;
Figure 5b shows, over time, the leakage current measured in a salt-fog chamber at a second location on an arrangement having an insulating linkage;
Figure 6a shows the leakage current measured in the salt-fog chamber, at the first location on the same arrangement having an insulating linkage, when the insulating linkage is shorted to ground potential;
Figure 6b shows the leakage current measured in the salt-fog chamber, at the second location on the same arrangement having an insulating linkage, when the insulating linkage is shorted to ground potential;
Figure 7 shows a plot of the number of number of dry band arcs required to cause significant visible damage to a test length of ADSS cable, as a function of arc current;
Figure 8a shows, schematically, an arrangement for installing and sleeving an ADSS optical cable;
Figure 8b shows a close up of the region marked in Figure 8a, including a sleeving installation assembly;
Figure 9 shows a close-up side view of the sleeving installation assembly of Figure 8b;
Figure 10 shows a sectional view of the sleeving installation assembly of Figure 9; and
Figure 11 shows a side view of a sleeved ADSS optical cable.

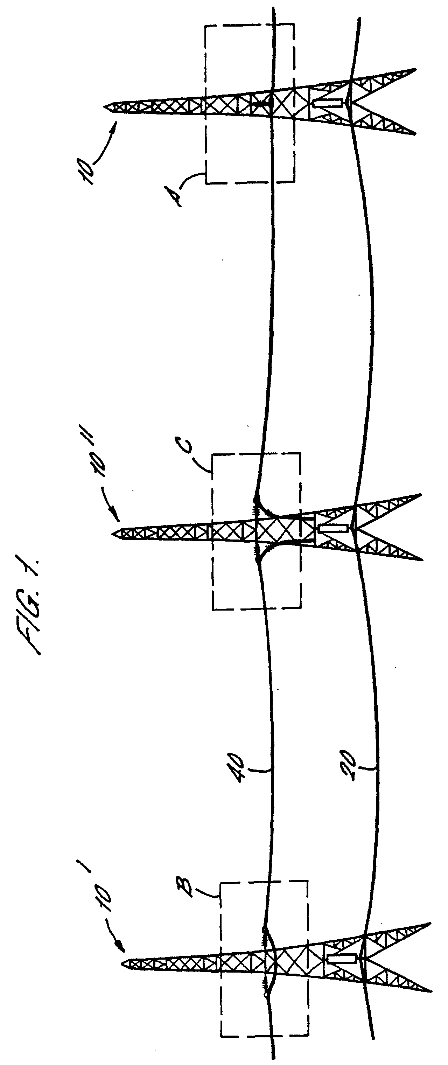

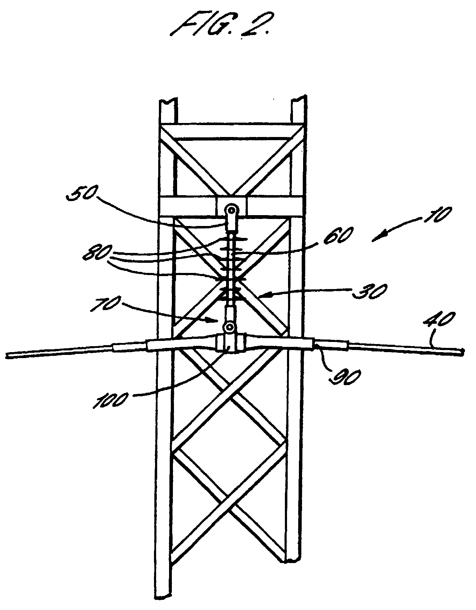

Referring first to Figure 1, three of a series of towers 10, 10' are shown schematically. The towers carry high tension power lines. Although it will be readily appreciated by the skilled person that the towers 10, 10' in reality carry a plurality of such high tension power lines, including a live and a neutral line, only one such power line 20 is shown in Figure 1 for the sake of clarity.

The power line 20 is suspended from the towers 10, 10' by insulating members (not shown). As will be familiar to those skilled in the art, such insulating members typically include a porcelain insulator to provide a high resistance path to earth from the high tension power line 20.

An all dielectric self-supporting (ADSS) optical cable 40 is also held relative to the towers 10, 10'. Such a cable comprises a plurality of optical fibres within a dielectric jacket. In order to maintain the integrity of this outer jacket, it is made of a relatively robust material such as a weather resistant, non-tracking or track-resistant polyolefin, preferably of high molecular weight.

Typically, the high tension power line 20 is at a potential of up to about 230kV relative to earth. Thus, the ADSS optical cable 40 sits in a potential gradient between the high tension power line 20 and ground. At the midpoint between two of the towers, the ADSS optical cable sits in a relatively low potential gradient because of the distance between the high tension power line 20 and ground. Towards the towers, however (i.e. at the points where the high tension power lines meet the insulating members) the potential gradient is much larger, as the towers themselves are at earth potential. It is at these points particularly where dry band arcing can occur on the ADSS optical cable 40.

There are a number of ways of supporting the ADSS optical cable 40 relative to the towers. In Figure 1, three such ways are shown schematically.

A first tower 10, known as a suspension tower, simply suspends the ADSS optical cable 40 by a suspension member 30 from the metalwork of the tower.

A second tower 10', known as a tension tower (or section tower), is however employed to hold the ADSS optical cable 40 under tension relative to the tower itself, again using a suspension member 30. This latter type of tower is typically used to change the direction of the powerline and is therefore necessary to have a similar arrangement for the ADSS optical cable 40. It is also helpful to employ such a tension tower at regular intervals along the array of towers, to divide the support of the powerline into sections. Likewise it is typical at such towers for the type of support arrangement for the ADSS optical cable to mirror that for the powerline. This reduces the damage caused to the arrangement if one of the suspension members 30 on a suspension tower 10 breaks.

A third tower 10'' is also shown in Figure 1. This tower is known as a termination or splice tower, and is employed for connecting an optical cable at ground level to a length of ADSS optical cable suspended in the air between electricity towers.

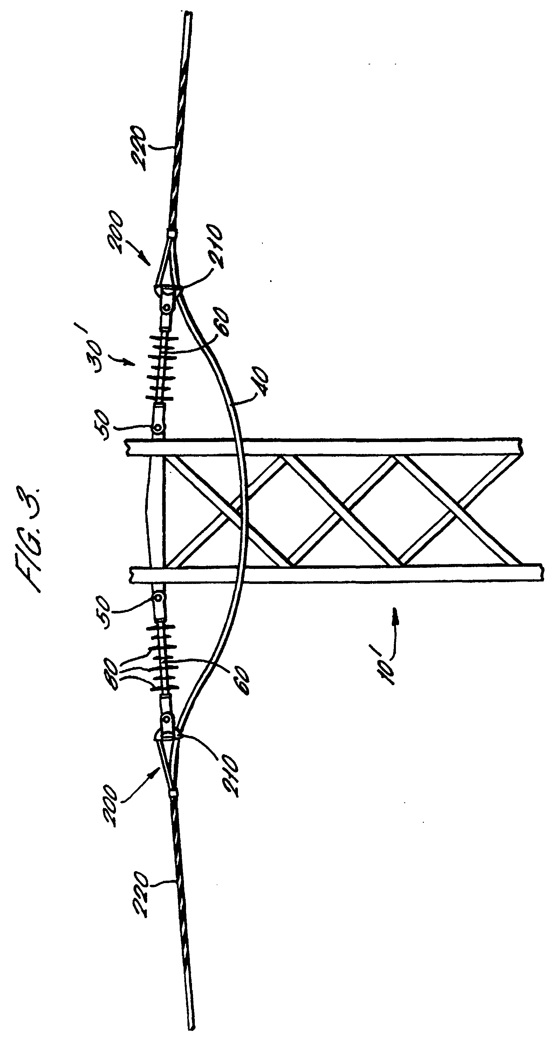

Figure 2 shows, schematically, the region A of Figure 1. In particular, a close up schematic view of the suspension member 30 of a suspension tower 10 is shown. Features common to Figures 1 and 2 are shown with like reference numerals.

The suspension member 30 comprises a first end 50 bolted or welded to the tower 10. An insulating linkage 60 is attached to the first end 50 of the suspension member 30. The insulating linkage preferably includes a number of shedded parts 80 which, in addition to increasing the surface area, also allow any rain or moisture to run off the insulator more easily.

The end of the insulating linkage 60 distal from the first end 50 of the suspension member 30 carries a preformed suspension fitting 70 for supporting the ADSS cable 40 from the tower 10. It will be appreciated that the distance between adjacent towers is typically several hundred metres or more, and the weight of ADSS optical cable 40 which must be supported by the suspension member 30 is therefore considerable. Therefore, the preformed tension fitting 70 typically includes relatively thick preformed metal wires 90. The preformed wires 90 are threaded through or otherwise attached to a lower end 100 of the insulating linkage 70 and then wrapped around the ADSS optical cable 40. The preformed wires may be wrapped around the ADSS optical cable 40 over a distance of a metre or more on either side of the insulating linkage in order to provide the necessary support for the cable even in high winds. Nonetheless, it is important to appreciate that the preformed wires 90 forming a part of the preformed tension fitting 70 lie around the surface of the outer jacket of the ADSS optical cable 40, and the fitting is not designed for insertion into the outer jacket thereof. A clamp type fitting could be employed instead, of course.

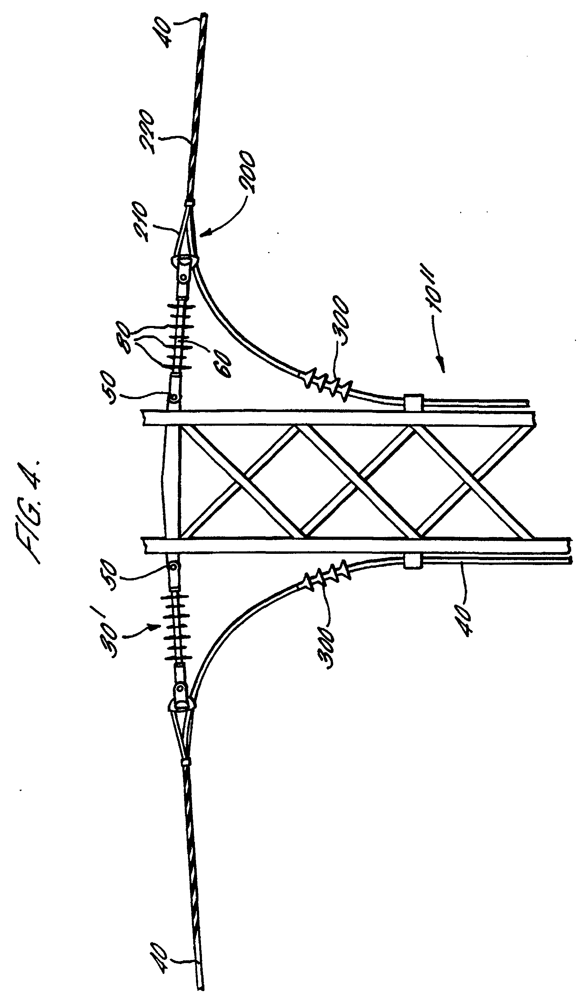

Figure 3 shows the region B of Figure 1 in close-up. Here, the manner of suspending an ADSS optical cable 40 under tension from a tension tower 10' is shown. Features common to Figures 2 and 3 are labelled with like reference numerals.

To suspend the ADSS optical cable 40 under tension from the tension tower 10', a suspension member 30' is employed. The suspension member 30' is generally similar to the suspension member 30 of Figure 2, though with some modifications.

A first end 50 of the suspension member 30' is bolted or otherwise affixed to the tension tower 10'. Attached to the first end 50 is an insulating linkage 60 which is preferably similar to the insulating linkage 60 of Figure 2. In particular, the insulating linkage of Figure 3 includes a plurality of sheds 80 to allow water to run off the linkage 60 more readily. Again, the insulating linkage is coated with silicone or another hydrophobic, non-tracking, heat resistant, ablative, material.

At the end of the insulating linkage 60 distal from the tension tower 10' is a tension member shown generally at 200 in Figure 3. The tension member 200 includes a clevis 210 which is held by the insulating linkage 60, and a preformed helical wire 220. The helical wire 220 is wrapped around the jacket of the ADSS optical cable 40 and grips it firmly.

The cable 40 is held under tension relative to the tension tower 10' by attaching the preformed tension member 200 and pulling it towards the tension tower 10'. Once the cable 40 is correctly located, the helical wire 220 of the tension member 200 is secured to the clevis 210.

As seen in Figure 3, it is preferable to use two suspension members 30', one on each side of the tension tower 10'. The cable 40 to the left of the tension tower 10' as shown in that Figure is held under tension as is the cable to the right thereof. There is thus a short length of ADSS optical cable 40 which hangs under its own weight (i.e. not under tension) between the tension member 200 on each side of the tension tower 10'. This arrangement allows a change in cable direction to be implemented. It also means that, for example, if the cable to the right of the tension tower 10' breaks, the cable to the left of the tension tower 10' will still be supported.

It should be noted that the section of the ADSS optical cable 40 not under tension is also not grounded and that special provision may be needed in the Safety Rules to ensure that this section of cable is not allowed to become hazardous.

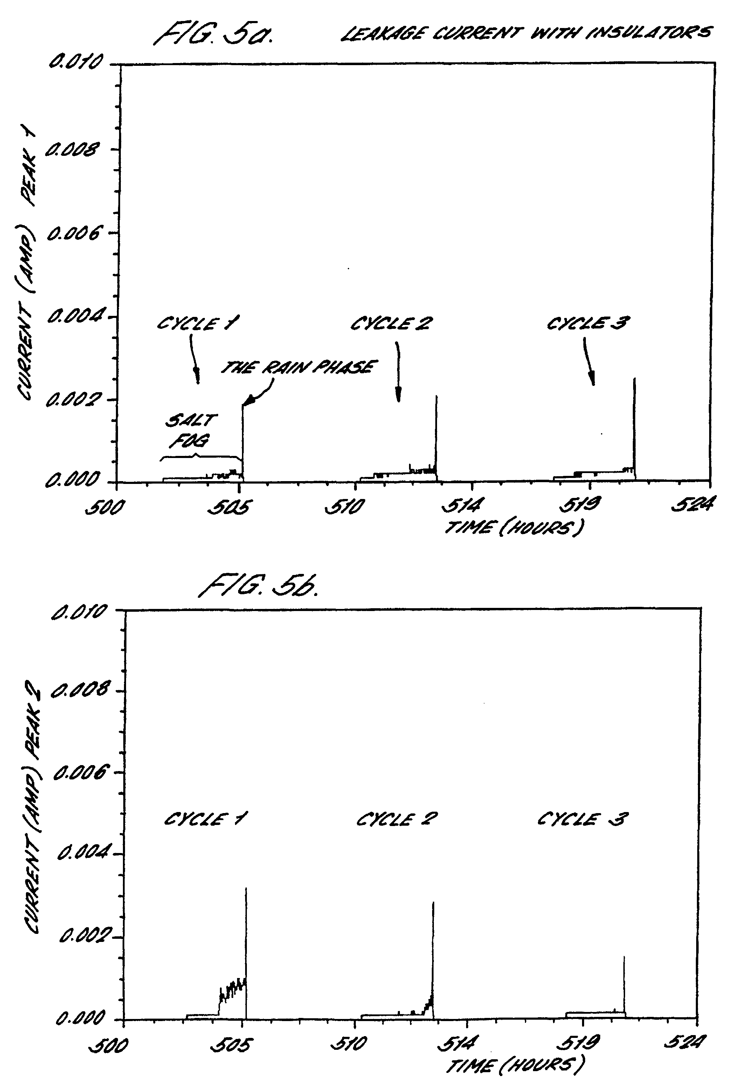

Referring now to Figure 4, a close up of the region C of the splice tower 10" in Figure 1 is shown. At the termination tower 10", a tension member 200 holds the ADSS optical cable 40 under tension, and is attached to the tower itself via an insulating linkage 60 exactly as with the arrangement of Figure 3 described above. This part of the device will not be described in further detail, therefore.

Rather than connecting the ADSS optical cable 40 to the other side of the tower as in Figure 3, however, here the cable is led down the tower 10" to ground level. To prevent mechanical strain, the cable 40 is tied to the tower 10" at regular intervals. A shedded sleeve 300 is also employed between the tension member 200 and the point at which the cable 40 is first tied to the tower 10" since for the reasons discussed above, it is important equally to reduce the effect of all leakage currents. This sleeve/cable arrangement has been discussed above and will not be described in further detail, therefore. In the case of a terminal tower, the cable passes underground, or may be spliced to an underground cable; in the case of a splice tower, the first cable is spliced to a second adjacent cable whose arrangement at the tower mirrors that of the first.

The insulating linkage 60 of Figures 2, 3 or 4 preferably has two interrelated properties. Firstly, it has a surface that is heat resistant, partially or fully resistant to electrical tracking and which minimises leakage currents, for example by having a surface that is hydrophobic. Therefore, any dry band arcing which does occur on the linkage 60 has insufficient energy to damage it. The ADSS dielectric cable 40 also has a track resistant jacket and so likewise any arc currents on its surface do not cause damage.

It will be understood that the degree of track resistance needed for both the insulator 60 and the ADSS jacket depends upon the leakage current limiting capability of the insulator.

Secondly, the insulating linkage is either partially or fully resistant to electrical tracking and has a hydrophobic surface (which therefore tends to limit surface leakage currents). This property causes the insulting linkage 60 to dry out more quickly than the ADSS optical cable 40, so that any dry band arcing preferentially occurs on the insulating linkage 60 rather than the ADSS optical cable 40.

Although not strong enough to be used as a jacket for the ADSS optical cable 40, silicone is particularly suitable for forming the surface of the insulating linkage 60. Not only is silicone non-tracking (i.e., fully resistant to electrical tracking), it is also extremely hydrophobic.

The Swedish Technical Research Institute have classified various substances in terms of grades of hydrophobicity, from HCl (high hydrophobicity) to HC7 (low hydrophobicity). Hydrophobicity grades are discussed further in the "Hydrophobicity Classification Guide", published by the Swedish Technical Research Institute (STRI Guide 92/1).

Silicone has further advantageous properties which make it suitable for use as an insulating linkage 60. Firstly, it is highly temperature resistant. This means that any dry band arcing that occurs on the insulating linkage 60 will be readily withstood, up to a current well above that which the ADSS cable could stand. Secondly, silicone can be ablative - that is, if an arc occurs, the surface of the silicone is renewed by being stripped or ablated of a very fine surface layer to leave a clean, (i.e., hydroscopic) non-tracking surface.

The type MIP-16-7 insulator, manufactured by Raychem Corporation, is suitable for the present application. This is an insulator having a silicone sheath, and is able to reduce the leakage current to around 0.1mA, well below the level at which the ADSS cable 40 (or the linkage 60) might be damaged. Alternatively, the Robosio E00697 type A insulator may be used.

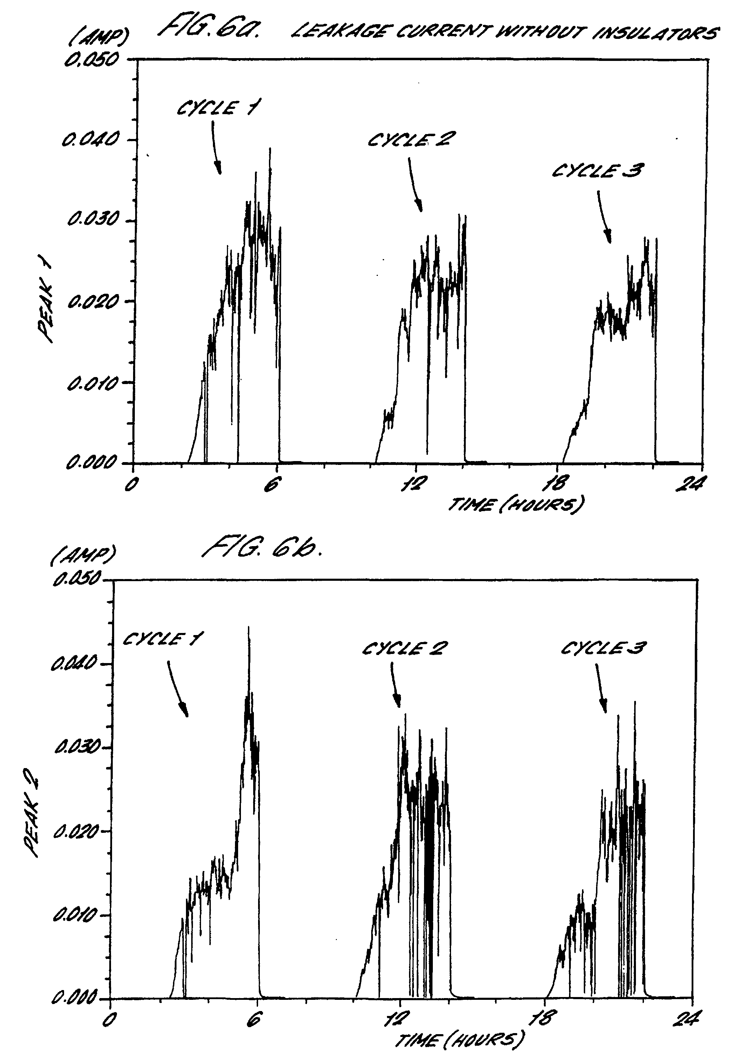

Referring now to Figures 5a and 5b, the results of an experiment to measure leakage currents are shown. A test arrangement comprising a length of dielectric cable, an insulating linkage and a sleeve was placed inside a salt-fog chamber. The components were arranged to simulate a short span i.e. the dielectric cable was suspended between fixed supports held at ground potential. At one end, the support included the insulating linkage; at the other end the cable was fitted with the sleeve. The centre point of the short span was connected to a high voltage source via a wire. Therefore leakage currents flowed in opposite directions along the cable from the centre point. Each leakage current was monitored.

A salt-fog was applied to the arrangement inside the salt-fog chamber over a fixed period of time, to allow the dielectric cable, sleeve and insulating linkage to become as wet as possible. Use of the salt-fog was then halted.

The leakage currents were measured over three such cycles. The results of leakage current measurement on the insulating linkage side are shown in Figure 5a. Similar results for leakage current measured on the sleeve side are shown in Figure 5b. It will be seen that in each case, the leakage current during application of the salt-fog averaged substantially less than 1mA, much less than would cause damage during dry band arcing. A peak occurs at the start of the so-called "rain phase" at the end of each cycle.

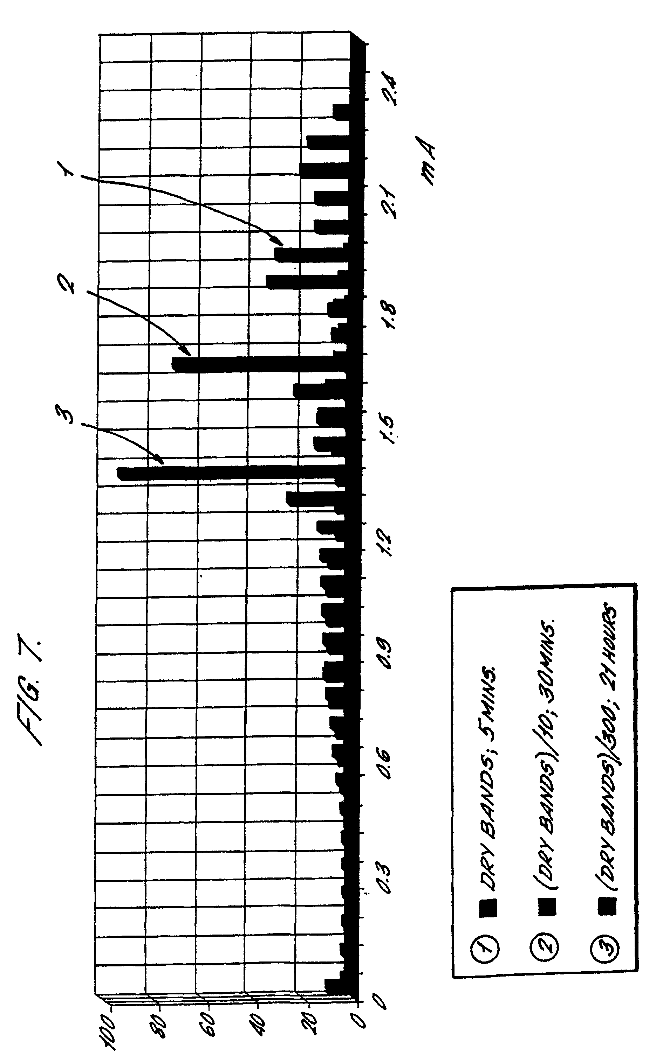

Figures 6a and 6b show the results of identical measurements to those described in connection with Figures 5a and 5b, but with the insulating linkage shorted out using a suitable conductor. It will be seen that the peak and average leakage currents on the insulating linkage side are much higher - around 30mA. Likewise, in Figure 6b, which shows the results of measurement of leakage current on the sleeve side, the leakage currents are typically 10mA rising to a peak of over 40mA in one case.

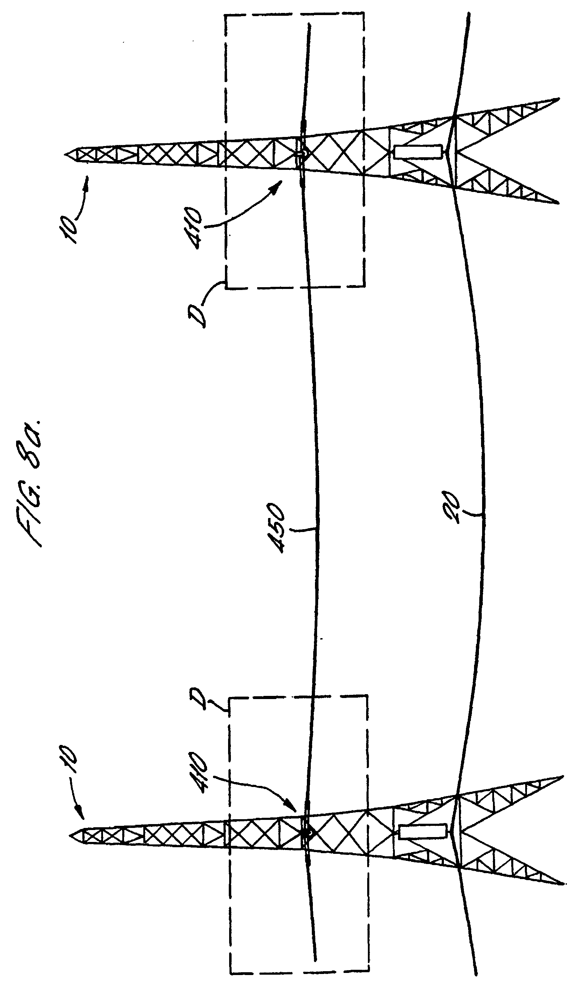

In Figure 7, the results of a second set of experiments carried out in a salt-fog chamber are shown. Three short lengths of dielectric cable were jacketed with a non-tracking silicone material and mounted in the salt-fog chamber horizontally. A high voltage was applied to the ends of each sample. Salty water was applied to the samples so as to encourage dry band arcing to occur. By holding the samples horizontally, the salty water was allowed to collect and drip off the underside. The dripping water formed a semi-continuous strip along the bottom of the samples, and gaps that formed in the water acted as sites for dry band arcing. By judicious adjustments, the arcing was forced to occur for long periods in nearly the same location.

In each experiment, a resistor was placed in the circuit to limit the current. In practice, the use of such a "ballast resistor" simulates different levels of jacket pollution and/or system voltage (higher pollution and voltage both tending to increase the leakage current).

With a current of about 2mA, significant jacket damage occurred after only 5 minutes. When the leakage current was reduced to about 1.7mA, jacket damage occurred after 30 minutes. Note that this set of histograms is reduced by a factor of 10; also that the current is stable at 1.7mA, indicating that stable arcing has been achieved in this case (stable arcing is potentially more destructive because the arcs are not moving about). Finally, the leakage current was reduced to about 1.3mA and the jacket withstood the arcing for at least 21 hours i.e. almost indefinitely. Note that the histogram is now reduced by a factor of 300; also that the arcing is stable.

Thus it may be seen that the level OL the leakage current is a significant factor in the amount of damage caused by dry band arcing; indeed it is apparent that there is a "threshold current" below which dry band arcing has no significant deleterious effect. In practice, of course, dry band arcing is most unlikely to remain in a single place on a dielectric cable and real weather situations are unlikely as a rule to create the conditions where dry band arcing can occur at all for such prolonged periods.

Whilst the foregoing has been described with the use of silicone as an insulating linkage 60, it is to be appreciated that the linkage 60 need not have all of the desirable properties outlined above in order to provide significant advantages over the prior art. For example, the use of an insulator 60 which limits the maximum leakage current to a very low value means that the high temperature and track resistant properties of insulator 60 and the jacket of the ADSS optical cable 40 are less critical.

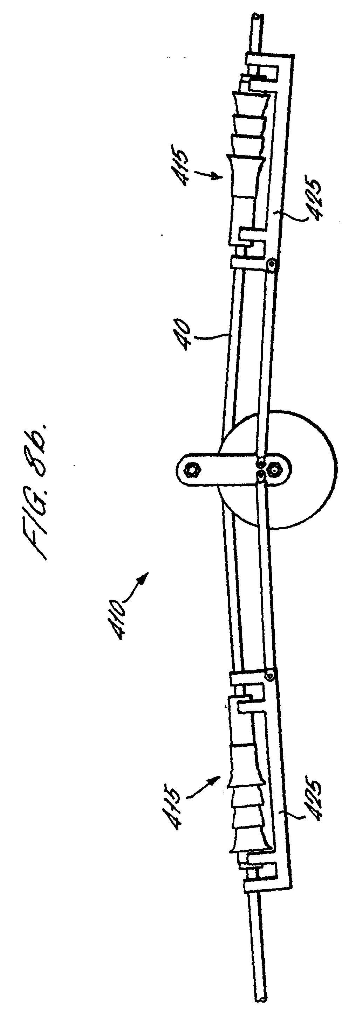

Referring now to Figures 8a, 8b, 9, 10 and 11, a method of installing and oversheathing an ADSS cable will be described.

In Figure 8a, two of a series of towers 10 for carrying high tension power lines 20 are shown. As with Figure 1, only one of the high tension power lines 20 is shown for clarity. As will be understood by the skilled person, the power line 20 is suspended from each tower 10 by insulating power line supports (not shown).

To install an ADSS cable between the towers 10, a pulley block arrangement 410 is first fitted. This arrangement is shown in more detail in Figure 8b and consists of a conventional pulley block adapted to support, on each side, a sleeving installation assembly 415. As may be seen in Figure 8b, the sleeving installation assembly 415 is attached to the pulley block by a clamp 425.

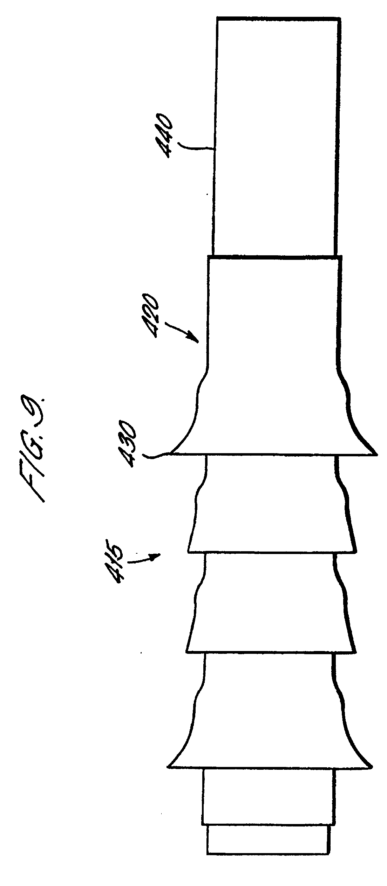

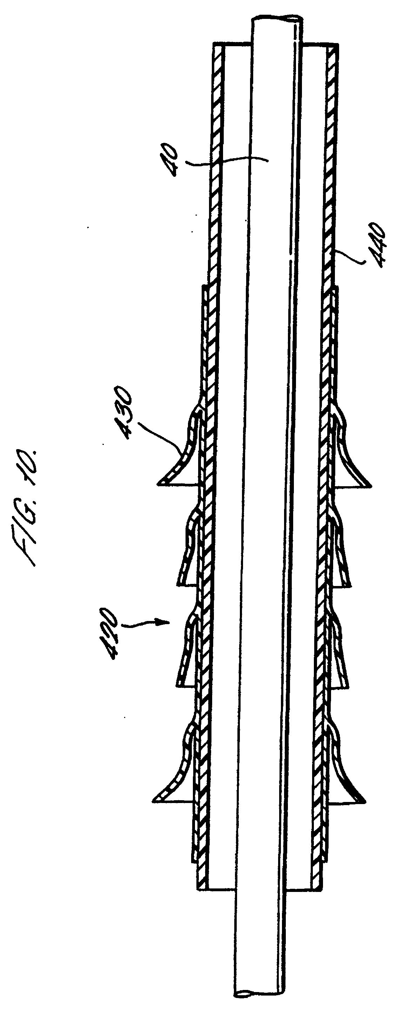

The sleeving installation assembly 415 is itself shown in close up side view in Figure 9 and in cross section in Figure 10. The installation assembly 415 comprises a sleeve 420 supported upon a hollow cylindrical mandrel 440. The sleeve 420 is preferably of the elastomeric non-heat shrink form which will be familiar to those skilled in the art. Such a sleeve is made of silicone, which is hydrophobic. Furthermore, the sleeve is formed with a number of sheds 430 (Figure 9) which allow rain and atmospheric moisture to run off the sleeve 420.

The outer diameter of the mandrel 440 supports the sleeve 420 in an expanded state. The inner diameter of the mandrel, however, is large enough to allow an ADSS optical cable 40, pulling rope and rope/ADSS optical cable coupling to pass through it.

Referring once more to Figure 8a, once the pulley blocks 410 have been fitted to each tower, and an installation assembly 415 has been held by the clamp 425 on each side of each pulley block, a pulling rope 450 is drawn over the pulleys. The use of a pulling rope which has been pre-installed over the pulleys will be familiar to those skilled in the art. However, in contrast to the prior art, the pulling rope is pre-installed over the pulleys whilst at the same time being threaded through the bore of the hollow cylindrical mandrels 440. The pulling rope continues to be pulled through successive mandrels 440 at adjacent towers, until the pulling rope 450 has passed along the full span of towers over which the ADSS cable is to be installed. At the end of the run (adjacent the end tower 10) is located a rope take-up drum and tensioner (not shown).

Once the pulling rope has been pre-installed, a first end of the ADSS cable, located adjacent to the first tower 10, is attached to the pulling rope. The rope is then drawn back along the pulleys, through the installation assemblies 415 and onto the take-up drum, dragging the first end of the ADSS cable 40 with it. Once the first end of the ADSS cable 40 reaches the pulling rope take-up drum, it is connected to a terminator at the ground level. The other, second end of the ADSS cable adjacent the first tower is also cut off and attached to a termination point.

Once the correct tension in the ADSS optical cable 40 has been achieved, each mandrel 440 is detached from the pulley block onto which it had been mounted. Next, the ADSS optical cable is raised from the pulley block and connected to the support member at that point. The mandrels 440 are then detached from their associated pulley block by removing them from their respective clamp 425, so that the mandrels are slidable relative to the (now fixed) ADSS cable 40. Next, the pulley blocks 410, as well as the clamps 425, are removed from the towers 10. Each mandrel 440 is then slid a short distance away from an adjacent ADSS cable support member, and the sleeve 420 on the mandrel 440 is slipped off. Because the sleeve 420 is elastomeric, it covers and grips the ADSS cable 40 at that point.

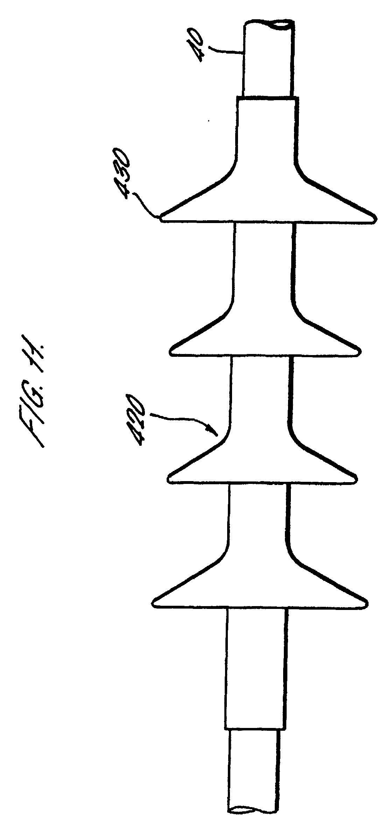

Figure 11 shows a side view of the sleeve 420 following installation. It is desirable that the bore of the sleeve is lined with a mastic or other sealant to prevent moisture ingress along the interface between the sleeve and the ADSS optical cable 40.

## Claims

1. A method of mounting a dielectric cable (40) on an overhead power line support structure (10), comprising:
placing a sleeve (420) around a mandrel (440), the mandrel (440) defining an aperture therethrough to receive the dielectric cable (40);
locating the mandrel (440) and sleeve (420) in fixed relation to the power line support structure (10);
urging the dielectric cable (40) through the aperture in the mandrel (440);
withdrawing the mandrel (440) from the sleeve (420) when the dielectric cable (40) has been urged through the aperture in the mandrel (440), such that the sleeve (420) encases the dielectric cable (40); and
removing the mandrel (440)from the dielectric cable (40).

2. The method of claim 1, in which the sleeve (420) is formed of a hydrophobic elastomer, such that withdrawal of the mandrel (440) from the sleeve (420) causes the sleeve elastically to grip the dielectric cable (40).

3. The method of claim 1 or claim 2, in which the mandrel (440) and sleeve (420) are located immediately adjacent to the power line support structure (10).

4. The method of claim 3, further comprising the step of:
supporting the dielectric cable (40) from the power line support structure (10) with a suspension member (60), a first end thereof being affixed to the power line support structure (10), and a second end thereof being affixed round the surface of the dielectric cable (40).

5. The method of claim 4, in which the sleeve (420) encases the second end of the suspension member (60) once the mandrel (440) is withdrawn from the sleeve (420).

6. The method of any one of the preceding claims, in which the step of locating the mandrel (440) and sleeve (420) in fixed relation to the power line support structure (10) comprises mounting the sleeved mandrel (440) upon a pulley block (410), and affixing the pulley block (410) to the power line support structure (10).

7. The method of claim 6, further comprising, prior to urging the dielectric cable (40) through the aperture in the mandrel (440), the steps of:
passing a pulling rope (450) through the aperture in the mandrel (440) once it has been mounted in fixed relation to the power line support structure (10),
attaching the pulling rope (450) to the dielectric cable (40) which is to be installed; and
drawing the pulling rope (450) through the aperture in the mandrel (440) which in turn causes the dielectric cable (40) attached to the said pulling rope (450) to be urged through the aperture in the mandrel (440).

## Patentansprüche

1. Verfahren zur Montage eines dielektrischen Kabels (40) an einem Stromfreileitungsträger (10), umfassend:
Anordnen einer Hülse (420) um einen Kern (440) herum, wobei der Kern (440) eine durchgehende Öffnung zur Aufnahme des dielektrischen Kabels (40) definiert;
Anordnen des Kerns (440) und der Hülse (420) in fester Beziehung zu dem Freileitungsträger (10);
Durchzwängen des dielektrischen Kabels (40) durch die Öffnung in den Kern (440);
Herausziehen des Kerns (440) aus der Hülse (420), wenn das dielektrische Kabel (40) durch die Öffnung in den Kern (440) hindurchgeführt worden ist, so daß die Hülse (420) das dielektrische Kabel (40) umhüllt, und
Entfernen des Kerns (440) von dem dielektrischen Kabel (40).

2. Verfahren nach Anspruch 1, bei dem die Hülse (420) aus einem hydrophoben Elastomer gebildet ist derart, daß beim Herausziehen des Kerns (440) aus der Hülse (420) die Hülse elastisch das dielektrische Kabel (40) ergreift.

3. Verfahren nach Anspruch 1 oder 2, bei dem der Kern (440) und die Hülse (420) unmittelbar angrenzend an den Freileitungsträger (10) angeordnet sind.

4. Verfahren nach Anspruch 3, mit den weiteren Schritten:
Abstützen des dielektrischen Kabels (40) an dem Freileitungsträger (10) mit einem Aufhängeglied (60), von dem ein erstes Ende an dem Freileitungsträger (10) befestigt und ein zweites Ende um die Oberfläche des dielektrischen Kabels (40) herum befestigt ist.

5. Verfahren nach Anspruch 4, bei dem die Hülse (420) das zweite Ende des Aufhängegliedes (60) umschließt, sobald der Kern (440) aus der Hülse (420) herausgezogen ist.

6. Verfahren nach einem der vorangehenden Ansprüche, bei dem der Schritt des Anordnens des Kerns (440) und der Hülse (420) in fester Beziehung zu dem Freileitungsträger (10) das Montieren des von der Hülse umgebenden Kerns (440) auf einem Rollenblock (410) und das Befestigen des Rollenblocks (410) an dem Freileitungsträger (10) umfaßt.

7. Verfahren nach Anspruch 6, welches ferner, vor dem Hindurchziehen des dielektrischen Kabels (40) durch die Öffnung in dem Kern (440), die folgenden Schritte umfaßt:
Durchführung eines Zugseils (450) durch die Öffnung in dem Kern (440), sobald dieser in fester Beziehung zu dem Freileitungsträger (10) montiert worden ist,
Befestigen des Zugseils (450) an dem zu montierenden dieleketrischen Kabel (40); und
Ziehen des Zugseils (450) durch die Öffnung in dem Kern (440), wodurch das an dem Zugseil (450) befestigte dielektrische Kabel (40) durch die Öffnung in den Kern (440) gezogen wird.

## Revendications

1. Procédé de montage d'un câble diélectrique (40) sur une structure de suspension de ligne à haute tension aérienne (10), lequel comprend :
la pose d'un manchon (420) autour d'un mandrin (440), le mandrin (440) définissant à travers ledit manchon une ouverture destinée à recevoir le câble diélectrique (40) ;
la disposition du mandrin (440) et du manchon (420) de manière fixe par rapport à la structure de support de ligne à haute tension (10) ;
l'introduction du câble diélectrique (40) par l'ouverture du mandrin (440) ;
le retrait du mandrin (440) du manchon (420) après que le câble diélectrique (40) a été introduit par l'ouverture du mandrin (440) de sorte que le manchon (420) enveloppe le câble diélectrique (40) ; et
l'enlèvement du mandrin (440) du câble diélectrique (40) .

2. Procédé selon la revendication 1, dans lequel le manchon (420) est fait d'un élastomère hydrofuge de sorte que le fait de retirer le mandrin (440) du manchon (420) conduise à ce que le manchon saisisse de façon élastique le câble diélectrique (40).

3. Procédé selon la revendication 1 ou la revendication 2, dans lequel le mandrin (440) et le manchon (420) sont placés juste à côté de la structure de support de ligne à haute tension (10).

4. Procédé selon la revendication 3 comprenant, de plus, l'étape suivante :
soutien du câble diélectrique (40) depuis la structure de support de ligne à haute tension (10) au moyen d'un élément de support (60) dont une première extrémité est fixée à la structure de support de ligne à haute tension (10) et dont une seconde extrémité est fixée autour de la surface du câble diélectrique (40).

5. Procédé selon la revendication 4, dans lequel le manchon (420) enveloppe la seconde extrémité de l'élément de suspension (60) une fois que le mandrin (440) a été retiré du manchon (420).

6. Procédé selon l'une quelconque des revendications précédentes, dans lequel l'étape consistant à disposer le mandrin (440) et le manchon (420) de manière fixe par rapport à la structure de support de ligne à haute tension (10) comprend le montage du mandrin gainé (440) sur une moufle (410) et la fixation de la moufle (410) à la structure de support de ligne à haute tension (10).

7. Procédé selon la revendication 6 comprenant de plus, avant l'introduction du câble diélectrique (40) par l'ouverture du mandrin (440), les étapes suivantes :
passage d'une corde de tirage (450) par l'ouverture du mandrin (440) une fois que celui-ci a été monté de manière fixe par rapport à la structure de support de ligne à haute tension (10) ;
attache de la corde de tirage (450) au câble diélectrique (40) à installer ; et
traction de la corde de tirage (450) par l'ouverture du mandrin (440), ce qui, en conséquence, entraîne l'introduction du câble diélectrique (40) attaché à ladite corde de tirage (450) par l'ouverture du mandrin (440).
